(19) Europäisches Patentamt
European Patent Office
Office européen des brevets

(11) **EP 4 311 927 B1**

(12) **FASCICULE DE BREVET EUROPEEN**

(45) Date de publication et mention
de la délivrance du brevet:
**11.02.2026   Bulletin 2026/07**

(21) Numéro de dépôt: **23185422.5**

(22) Date de dépôt: **13.07.2023**

(51) Classification Internationale des Brevets (IPC):
**F02D 41/02** *(2006.01)*        **F02D 41/12** *(2006.01)*

(52) Classification Coopérative des Brevets (CPC):
**F02D 41/023; F02D 41/0295; F02D 41/123;**
F02D 2041/1431; F02D 2200/0814;
F02D 2200/0816

(54) **PROCÉDÉ DE CONTRÔLE DE L'INJECTION DE CARBURANT DANS UN MOTEUR À COMBUSTION INTERNE ET SYSTÈME ASSOCIÉ**

VERFAHREN ZUR STEUERUNG DER KRAFTSTOFFEINSPRITZUNG IN EINER BRENNKRAFTMASCHINE UND SYSTEM DAFÜR

METHOD FOR CONTROLLING FUEL INJECTION IN AN INTERNAL COMBUSTION ENGINE AND ASSOCIATED SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:   **27.07.2022   FR 2207721**

(43) Date de publication de la demande:
**31.01.2024   Bulletin 2024/05**

(73) Titulaire: **Horse Powertrain Solutions, S.L.U.**
**28106 Alcobendas (Madrid) (ES)**

(72) Inventeur: **FASOLO, BERTRAND**
**78084 GUYANCOURT (FR)**

(74) Mandataire: **Elzaburu S.L.P.**
**Edificio Torre de Cristal**
**Paseo de la Castellana 259 C, planta 28**
**28046 Madrid (ES)**

(56) Documents cités:
**FR-A1- 3 033 364      KR-A- 20190 012 538**
**US-A- 5 941 211      US-A1- 2018 306 134**

## Description

### Domaine technique

L'invention concerne un procédé de contrôle de l'injection de carburant dans un moteur à combustion interne.
Elle trouve une application avantageuse dans un véhicule automobile équipé d'un moteur à allumage commandé.

### Techniques antérieures

Un véhicule automobile muni d'un moteur à combustion est généralement doté d'un système de post-traitement des espèces polluantes des gaz d'échappement du véhicule afin de réduire les émissions de ces espèces polluantes.
Le système de post-traitement d'un moteur à allumage commandé (du type fonctionnant notamment à l'essence) comprend généralement un catalyseur trois voies qui effectue un traitement catalytique des gaz d'échappement, tels que par exemple des oxydations du monoxyde de carbone et des hydrocarbures imbrûlés, et des réductions des oxydes d'azote. L'efficacité de traitement des différentes espèces polluantes dépend de la quantité d'oxygène stockée dans le catalyseur.
Lorsque la quantité d'oxygène stocké dans le catalyseur est proche de zéro, l'efficacité d'oxydation de certaines espèces polluantes diminue. Tel est en particulier le cas des hydrocarbures imbrulés et du monoxyde de carbone.
Lorsque la quantité d'oxygène stocké est proche de la capacité de stockage maximal en oxygène du catalyseur, l'efficacité de réduction des espèces polluantes, par exemple pour des oxydes d'azote, diminue.
La quantité d'oxygène stocké dans le catalyseur dépend de l'injection d'un mélange air-carburant.
Lors de certaines situations de conduite, par exemple lors d'un changement de rapport d'une boîte de vitesse ou d'une phase dite de lever de pied, l'injection de carburant est coupée automatiquement pour diminuer la consommation de carburant et de l'air est envoyé dans le système de post-traitement. La quantité d'oxygène stocké dans le catalyseur augmente alors, par exemple jusqu'à la valeur de capacité maximale de stockage du catalyseur, et des espèces polluantes ne sont plus traitées efficacement, plus particulièrement les oxydes d'azote (NOx) comprenant essentiellement du monoxyde d'azote et du dioxyde d'azote.
Lors de la reprise de l'injection de carburant, alors que la quantité d'oxygène stockée dans le catalyseur a atteint la capacité maximale de stockage en oxygène signifiant que le catalyseur est saturé en oxygène, une stratégie de purge ou de baisse de charge d'oxygène du catalyseur est généralement effectuée. La stratégie de purge du catalyseur comprend une augmentation de la richesse du mélange air-carburant injecté jusqu'à une richesse supérieure à 1, c'est-à-dire une augmentation de la proportion de carburant dans le mélange air-carburant injecté de sorte que la proportion de carburant est supérieure à celle présente dans le mélange air-carburant stœchiométrique, de manière à diminuer rapidement la quantité d'oxygène stockée dans le catalyseur. Cependant, la stratégie de purge du catalyseur augmente considérablement la consommation en carburant du véhicule.
Il est connu que la richesse du mélange air-carburant injecté influe sur la quantité d'oxygène stockée dans le catalyseur. Ainsi, une solution pour limiter l'augmentation de la quantité d'oxygène stockée dans le catalyseur, par exemple lors du changement de rapport de la boîte de vitesse, est de maintenir dans des proportions stœchiométriques la richesse du mélange air-carburant injecté en retardant la coupure d'injection du carburant précédemment évoquée pour ne pas saturer le catalyseur en oxygène. Le retard avant la coupure de l'injection de carburant est généralement fixé à une durée prédéterminée et constante tel que décrit dans la demande de brevet non publiée FR 2 101 953. En particulier, la durée constante ne dépend pas de l'état d'usure du véhicule et plus particulièrement de la variation de la capacité de stockage en oxygène du catalyseur lors de son vieillissement, ce qui conduit à une surconsommation de carburant ou à la saturation du catalyseur en oxygène. La capacité de stockage en oxygène d'un catalyseur vieilli par rapport à un autre catalyseur neuf peut par exemple varier de 35%.
Une amélioration proposée dans la demande de brevet non publiée FR 2 202 809 fixe le retard avant la coupure de l'injection de carburant à une durée dépendant de la capacité maximale de stockage en oxygène courante du catalyseur. Néanmoins, cette stratégie ne tient pas compte de la dispersion possible des temps de passage des rapports de boîte de vitesses. Par exemple, un passage lent conduit à maximiser le chargement en oxygène du catalyseur.
La publication FR-A- 3 101 673 divulgue un procédé de réglage de la richesse dans un moteur à combustion interne de véhicule automobile équipé d'un catalyseur amont et d'un catalyseur aval. La richesse est corrigée en permanence pour atteindre une consigne de stockage d'oxygène dans le catalyseur amont comprise entre un seuil minimal et un seuil maximal. Dans cette configuration, le catalyseur aval a tendance à être presque constamment saturé en oxygène. Après une phase de lever de pied, la consigne de stockage d'oxygène est réglée pendant une durée prédéterminée sur la valeur du seuil minimal, afin de diminuer la quantité d'oxygène présente dans le catalyseur aval et d'améliorer les performances de dépollution globales des deux catalyseurs. Néanmoins, ce procédé curatif est uniquement applicable à une architecture à deux catalyseurs disposés en série et consiste à baisser temporairement la valeur de la consigne de stockage d'oxygène dans le catalyseur amont pour ainsi permettre qu'il y ait des fuites de HC et/ou CO à l'aval du catalyseur amont afin de consommer l'oxygène à l'intérieur du catalyseur aval. Un autre exemple d'une méthode similaire est présenté dans le document US 2018/306134 A1.

**Exposé de l'invention**

Au vu de ce qui précède, l'invention vise à renforcer la robustesse du traitement des substances polluantes, notamment des NOx.

L'invention a pour objet un procédé de contrôle de l'injection de carburant dans un moteur à combustion interne à allumage commandé de véhicule automobile équipé d'un dispositif de post-traitement d'effluents gazeux comprenant au moins un catalyseur de type trois voies.

Ce procédé comprend des étapes de :

- Détermination de la capacité maximale de stockage en oxygène du catalyseur,
- Calcul d'une consigne de richesse estimée, calculée en fonction d'un délai de transit des gaz entre le moteur et une ligne d'échappement,
- Calcul d'une quantité estimée de stockage en oxygène du catalyseur en fonction de la consigne de richesse estimée, et
- Commande de reprise de l'injection lorsque la quantité estimée de stockage en oxygène du catalyseur atteint une valeur de seuil déterminée en fonction de la capacité maximale de stockage en oxygène du catalyseur.

Le procédé de contrôle de l'invention permet de contrôler l'injection de carburant par une stratégie de type préventif qui évite la saturation en oxygène du catalyseur et qui contribue à renforcer l'efficacité du traitement des substances polluantes, notamment des oxydes d'azote.

Avantageusement, la valeur de seuil est déterminée comme un pourcentage de la capacité maximale de stockage en oxygène du catalyseur.

Par exemple, le pourcentage est supérieur à 80%.

Selon une caractéristique, la capacité maximale de stockage en oxygène est déterminée au cours d'une transition d'un mode de fonctionnement en mélange pauvre du moteur, apte à saturer le catalyseur en oxygène, vers un mode de fonctionnement en mélange riche du moteur, apte à vidanger le catalyseur de son stock d'oxygène, le début de ladite saturation étant mise en évidence par le basculement d'une sonde à oxygène située en aval du catalyseur vers un niveau de tension exceptionnellement faible, et le début de ladite vidange étant mise en évidence par le basculement de ladite sonde à oxygène située en aval du catalyseur vers un niveau de tension exceptionnellement élevée.

Selon une autre caractéristique, la capacité maximale de stockage en oxygène OSC est déterminée à partir d'un débit des gaz d'échappement Qech du moteur et d'une richesse $R\lambda$ provenant d'une sonde située en amont du catalyseur utilisant l'équation suivante :

$$(\beta - \alpha) \times OSC = \int_{t0}^{t1} Q_{ech} \times (1 - R_\lambda) \times \tau_{O2} \times dt \qquad (Eq.3)$$

dans laquelle :

- $\tau_{O2}$ désigne le taux massique d'oxygène dans l'air (environ 23%),
- t0 représente l'instant où l'unité électronique de commande bascule le fonctionnement du moteur en mélange riche, immédiatement après le basculement vers une tension exceptionnellement faible de la sonde à oxygène située en aval du catalyseur,
- t1 représente l'instant où la sonde située en aval du catalyseur bascule vers une tension exceptionnellement élevée,
- $\alpha$ désigne une constante sensiblement égale à 90%, et
- $\beta$ désigne une constante sensiblement égale à 40%.

La consigne de richesse estimée est calculée en fonction d'un délai de transit des gaz entre le moteur et une ligne d'échappement.

Par exemple, le délai de transit est cartographié à l'avance dans une mémoire d'une unité électronique de commande du moteur, ledit délai dépendant d'un point de fonctionnement du moteur et de sa géométrie.

Selon un autre aspect, l'invention a également pour objet un système de contrôle de l'injection de carburant dans un moteur à combustion interne, à allumage commandé de véhicule automobile équipé d'un dispositif de post-traitement d'effluents gazeux comprenant au moins un catalyseur de type trois voies.

Le système comprend des moyens de détermination de la capacité maximale de stockage en oxygène du catalyseur, des moyens de calcul d'une consigne de richesse estimée, calculée en fonction d'un délai de transit des gaz entre le moteur et une ligne d'échappement, des moyens de calcul d'une quantité estimée de stockage en oxygène du catalyseur en fonction de la consigne de richesse estimée, et des moyens de reprise de l'injection lorsque la quantité estimée de stockage en oxygène du catalyseur atteint une valeur de seuil déterminée en fonction de la capacité maximale de stockage en oxygène du catalyseur.

Selon un autre aspect, l'invention a également pour objet un véhicule automobile équipé d'un système de contrôle de l'injection de carburant tel que décrit ci-dessus.

## Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] illustre, de manière schématique, la structure d'un moteur à combustion interne d'un véhicule automobile équipé d'un système de contrôle de l'injection de carburant selon l'invention ; et
[Fig 2] illustre une stratégie de reprise anticipée de l'injection selon l'invention ; et
[Fig 3] illustre un organigramme des étapes d'un procédé de contrôle de l'injection de carburant selon l'invention.

## Exposé détaillé d'au moins un mode de réalisation

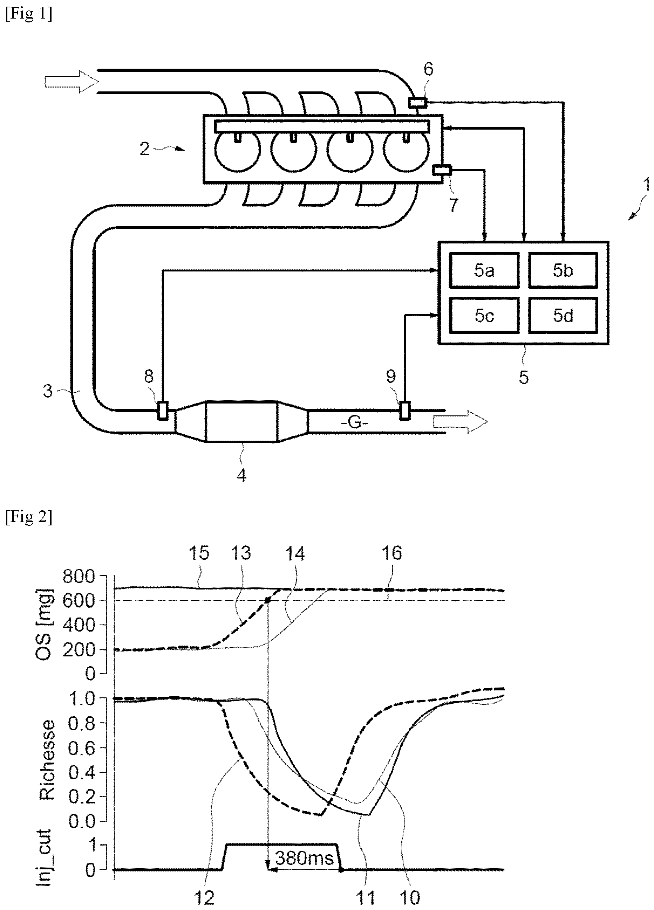

Sur la figure 1, on a représenté un dispositif de traitement 1 des espèces polluantes émises par un moteur 2 à combustion interne, notamment un moteur de véhicule automobile. Le moteur 2 est un moteur à allumage commandé à injection directe ou indirecte. De manière non limitative, il peut être à aspiration naturelle ou de type suralimenté. Il peut aussi présenter d'autres particularités, comme par exemple être associé à au moins un circuit de recirculation partielle des gaz d'échappement à l'admission.

Une ligne d'échappement 3 permet l'évacuation des gaz G du moteur 2 vers l'atmosphère extérieure. Un dispositif de post-traitement destiné à purifier les gaz d'échappement G est interposé dans la ligne 3. Il comporte principalement au moins un catalyseur 4 de type trois voies. Le catalyseur 4 permet de traiter plusieurs substances polluantes telles que les oxydes d'azote (NOx), les hydrocarbures imbrûlés (HC) et les oxydes de carbone (CO) présents dans les gaz de combustion du moteur 2.

Le dispositif de traitement 1 des espèces polluantes peut comprendre en outre un deuxième dispositif de post-traitement (non représenté) comportant principalement un filtre à particules fines.

Le moteur 2 est associé à un circuit d'alimentation en carburant comprenant, par exemple, des injecteurs de carburant (non référencés) injectant du carburant directement dans chaque cylindre à partir d'un réservoir à carburant (non représenté).

Par ailleurs, le moteur comprend une unité électronique de commande 5 programmée de manière à commander les différents éléments du moteur 2 ou, de manière générale du système de propulsion du véhicule, à partir de données recueillies par des capteurs à différents endroits du moteur 2.

L'unité électronique de commande 5 comporte un module de stockage d'information 5a, en l'espèce une mémoire, un module de calcul 5b, un module de mesure 5c et un module de commande 5d.

L'unité électronique de commande 5 permet de déterminer la quantité de carburant Qcarb à injecter dans le moteur 2 pour que la richesse du mélange soit la plus proche d'une richesse donnée, par exemple une valeur de richesse égale à 1 correspondant aux proportions stœchiométriques du mélange air-carburant. L'unité électronique de commande 5 commande la désactivation et l'activation des injecteurs de carburant.

La richesse du mélange air-carburant est contrôlée par l'unité électronique de commande 5 à partir d'informations et de paramètres tels que la pression régnant dans le collecteur d'admission du moteur 2, le régime du moteur 2 et une information représentative de la richesse du mélange air-carburant.

Dans l'exemple illustré sur la figure 1, l'unité électronique de commande 5 est ainsi reliée à un capteur de pression 6 qui permet de déterminer une valeur de la pression régnant dans le collecteur d'admission du moteur 2, à un capteur 7 qui permet de déterminer le nombre de passages au point mort haut de l'un des pistons du moteur 2, et à une première sonde à oxygène 8 montée en amont du catalyseur 4.

La sonde 8 située en amont du catalyseur 4 est du type proportionnel. Elle fournit une information, généralement un signal de tension, qui est représentative de la richesse du mélange et qui permet d'en déterminer la valeur.

L'unité électronique de commande 5 est en outre reliée à une deuxième sonde à oxygène 9 montée en aval du catalyseur 4. Cette sonde 9 peut être du type binaire, c'est-à-dire fournissant un signal de sortie qui ne permet que de connaître l'état riche ou pauvre du mélange.

La figure 2 illustre l'évolution dans le temps des données mesurées lors d'un changement de rapport de boîte à vitesse d'un moteur à combustion interne, accompagnées de données issues de modélisations et d'une stratégie de rétablissement anticipé de l'injection mise en œuvre au moyen d'un procédé de contrôle d'injection selon l'invention.

La figure 2 montre l'évolution des données mesurées lors d'une coupure d'injection résultant d'un changement de rapport de vitesses. L'invention s'applique également à des phases de lever de pied, lorsque le conducteur est amené à lever le pied de la pédale d'accélérateur, provoquant une coupure d'injection de carburant.

Dans l'exemple illustré, un changement de rapport de boîte de vitesse entraîne une coupure de l'injection de carburant, représentée par le paramètre *inj_cut* de valeur égale à 1 en cas de coupure de l'injection et de valeur égale à 0 dans le cas contraire.

La courbe 10 représente la richesse déterminée à base des mesures effectuées par la sonde à oxygène 8 située en amont du catalyseur 4.

La courbe 11 représente la consigne de richesse utilisée pour la régulation de la richesse du moteur.

Lorsque l'on rétablit l'injection de carburant, autrement dit lorsque le paramètre *inj_cut* repasse à une valeur nulle, il existe un délai avant que l'on n'observe son impact sur la richesse mesurée 10, du fait principalement du temps de transit des gaz depuis les cylindres du moteur 2 à la sonde à oxygène 8 située en amont du catalyseur 4. La valeur de ce délai est généralement déjà disponible pour l'unité électronique de commande 5 car il est utilisé dans les procédés usuels de régulation de richesse. Ce délai peut par exemple être déterminé et être stocké à l'avance sous forme de cartographie dans la mémoire 5a de l'unité électronique de commande 5. La valeur du délai dépend du point de fonctionnement du moteur et de sa géométrie.

Ce délai est pris en compte pour anticiper la reprise de l'injection de carburant en calculant une consigne de richesse estimée représentée par la courbe 12 de la figure 2 qui devance ainsi la courbe 11 représentative de la consigne de richesse utilisée classiquement.

En fonction de la consigne de richesse estimée, l'unité électronique de commande 5 calcule également une quantité estimée de stockage en oxygène du catalyseur 4, illustrée par la courbe 13 et décalée par rapport à la courbe 14 représentant la quantité de stockage en oxygène du catalyseur 4 calculée sans anticipation.

Le paramètre *OSC* représente la capacité maximale de stockage en oxygène du catalyseur 4, illustrée par le niveau sensiblement constant 15.

La capacité maximale de stockage en oxygène OSC peut être avantageusement déterminée régulièrement à chaque fois que le moteur 2 est démarré, afin de tenir compte du vieillissement du catalyseur 4 sur le long terme et d'éventuelles défaillances. La valeur de la capacité maximale de stockage en oxygène OSC ainsi déterminée peut être stockée dans la mémoire 5a de l'unité électronique de commande 5 pour des utilisations ultérieures.

L'unité électronique de commande 5 du moteur peut notamment provoquer une transition d'un mode de fonctionnement pauvre vers un mode de fonctionnement riche du moteur 2. Dans un premier temps, le fonctionnement du moteur avec une richesse nulle correspondant à une coupure d'injection fait saturer le catalyseur 4 en oxygène. L'approche de la capacité maximale de stockage en oxygène OSC, par exemple 90% de cette capacité maximale de stockage OSC, est signalée par le fait que la sonde 9 située en aval du catalyseur 4 commence à basculer vers un niveau de tension Umin exceptionnellement faible, par exemple inférieur à 150mV.

A cet instant, on peut considérer que l'équation suivante est vérifiée :

$$OS = \alpha \times OSC \qquad\qquad (Eq.1)$$

avec $\alpha \approx 0.9$.

En d'autres termes, le basculement de la sonde détecte un début de saturation du catalyseur, lorsque la valeur de saturation du catalyseur atteint une valeur de seuil prédéterminée, par exemple de 90% de la saturation complète, c'est-à-dire un pourcentage $\alpha$ de l'OSC élevé et voisin de 90%. La valeur de saturation complète peut, par exemple, être obtenue selon des essais réalisés sur banc de test, par pesage.

L'unité électronique de commande 5 applique alors immédiatement un niveau de richesse supérieur à 1 lors de la reprise après coupure d'injection, de façon à laisser le catalyseur 4 se vider progressivement de son oxygène, jusqu'à ce que la sonde 9 située en aval du catalyseur 4 observe que la masse d'oxygène stockée s'approche de zéro, par un basculement vers un niveau de tension Umax exceptionnellement élevé, par exemple supérieur à 870 mV.

A cet instant, la quantité d'oxygène stockée atteint encore 40% de la capacité maximale de stockage en oxygène.

L'équation suivante est alors vérifiée :

$$OS = \beta \times OSC \qquad\qquad (Eq.2)$$

avec $\beta \approx 0.4$.

En d'autres termes, le basculement de la sonde permet ici de détecter un début de vidange du catalyseur, correspondant à un pourcentage $\beta$ encore significatif, égal à 40% de l'OSC.

Le module de calcul 5b calcule alors la capacité de stockage en oxygène OSC en utilisant l'équation suivante :

$$(\beta - \alpha) \times OSC = \int_{t0}^{t1} Q_{ech} \times (1 - R_\lambda) \times \tau_{O2} \times dt \qquad (Eq.3)$$

dans laquelle :

- Qech désigne le débit des gaz d'échappement,
- $R_\lambda$ désigne la richesse en amont du catalyseur,
- $\tau_{O2}$ désigne le taux massique d'oxygène dans l'air (environ 23%),
- t0 représente l'instant où l'unité électronique de commande bascule le fonctionnement du moteur en mélange riche, immédiatement après le basculement vers une tension exceptionnellement faible de la sonde à oxygène située en aval du catalyseur,
- t1 représente l'instant où la sonde située en aval du catalyseur bascule vers une tension exceptionnellement élevée,
- $\alpha$ désigne une valeur de seuil sensiblement égale à 90%, et
- $\beta$ désigne une valeur de seuil sensiblement égale à 40%.

En se référant de nouveau à la figure 2, lorsque la quantité estimée de stockage en oxygène 13 atteint une valeur de seuil 16, l'unité électronique de commande 5 commande la reprise de l'injection de carburant même en l'absence de requête de couple plus élevée, c'est-à-dire même si le conducteur n'a pas réappuyé sur la pédale d'accélération.

La valeur de seuil 16 est représentative d'une zone de fuite « pauvre », c'est-à-dire une zone dans laquelle le stock d'oxygène dans le catalyseur est assez élevé pour commencer à ne plus traiter les oxydes d'azote efficacement. De préférence, la valeur de seuil 16 est déterminée par l'unité électronique de commande 5 en fonction de la capacité de stockage en oxygène du catalyseur 4, par exemple égale à un pourcentage de la capacité de stockage en oxygène du catalyseur, typiquement supérieur à 80%.

Sur l'exemple illustré en figure 2, l'injection est reprise de manière anticipée avec une avance de 380ms. Ainsi, la durée de coupure de l'injection de carburant passe de 600ms à 220ms.

Il est à noter que la reprise anticipée de l'injection selon l'invention ne présente pas de risque particulier d'envolée de régime ou d'accélération intempestive, car l'embrayage est encore en position débrayée. En outre, le réglage d'une avance à l'allumage faible implique que le carburant injecté brûle tardivement dans le cycle de combustion sans production significative de couple moteur.

La stratégie préventive proposée par l'invention permet de s'assurer que la quantité d'oxygène contenu dans le catalyseur ne dépasse pas une valeur de seuil et permet ainsi de garantir un traitement efficace des substances polluantes, notamment des NOx. Cette stratégie présente l'avantage d'une très grande robustesse quant au traitement des NOx en comparaison avec les procédés classiques car elle permet de tenir compte de plusieurs paramètres variables tels que la capacité de stockage en oxygène du catalyseur et la durée de passage des rapports. De plus, rétablir l'injection de carburant en fin de changement de rapport permet de réduire la consommation de carburant par rapport à une même injection en début du changement de rapport, autrement dit par rapport à un retard de coupure d'injection. En effet, en fin de changement de rapport de vitesse, le débit d'air se réduit fortement jusqu'à atteindre une asymptote correspondant à la limite de pression collecteur minimale. Ainsi, le débit de carburant à injecter pour générer un mélange à richesse donnée est significativement plus faible.

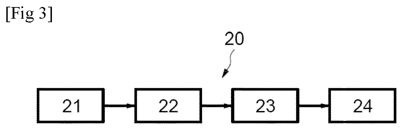

On va maintenant décrire en référence à la figure 3 un procédé 20 de régulation de l'injection de carburant dans un moteur 2 à combustion interne tel que décrit précédemment. Un tel procédé est notamment mis en œuvre par l'unité électronique de commande 5 à partir des mesures délivrées par les divers capteurs du moteur et en pilotant les divers éléments du moteur ou, de manière générale, du système de propulsion du véhicule.

Le procédé 20 comprend une étape 21 préalable de détermination de la capacité maximale de stockage en oxygène OSC du catalyseur 4. Comme expliqué précédemment, la valeur de la capacité maximale de stockage en oxygène OSC est déterminée soit par un calcul effectué par le module de calcul 5b à partir de l'équation 3, soit directement à partir d'une valeur OSC calculée antérieurement et disponible dans la mémoire 5a de l'unité électronique de commande 5.

Lors de l'étape 22 suivante, le procédé se poursuit par le calcul d'une consigne de richesse estimée calculée par l'unité électronique de commande 5 en fonction d'un délai de transit des gaz entre le moteur 2 et la ligne d'échappement 3. Le délai de transit est cartographié à l'avance dans une mémoire 5a de l'unité électronique de commande 5 et dépend de la géométrie du moteur et du point de fonctionnement de celui-ci, typiquement représenté par le régime et la charge du moteur.

A partir de la consigne de richesse estimée, l'unité électronique de commande 5 calcule la quantité estimée de stockage en oxygène du catalyseur 4 (étape 23).

Lorsque la quantité estimée de stockage en oxygène calculée à l'étape 23 atteint une valeur de seuil prédéterminée, le procédé se poursuit par une commande de reprise de l'injection de carburant effectuée par le module de commande 5d de l'unité électronique de commande 5 (étape 24).

**Revendications**

1. Procédé (20) de contrôle de l'injection de carburant dans un moteur (2) à combustion interne à allumage commandé de véhicule automobile équipé d'un dispositif de post-traitement d'effluents gazeux comprenant au moins un catalyseur (4) de type trois voies, ledit procédé de contrôle étant **caractérisé en ce qu'**il comprend des étapes de :

   - Détermination de la capacité maximale de stockage en oxygène (OSC) du catalyseur (4),
   - Calcul d'une consigne de richesse estimée, calculée en fonction d'un délai de transit des gaz entre le moteur (2) et une ligne d'échappement (3),
   - Calcul d'une quantité estimée de stockage en oxygène du catalyseur (4) en fonction de la consigne de richesse estimée, et
   - Commande de reprise de l'injection lorsque la quantité estimée de stockage en oxygène du catalyseur (4) atteint une valeur de seuil déterminée en fonction de la capacité maximale de stockage en oxygène (OSC) du catalyseur (4).

2. Procédé (20) selon la revendication 1, dans lequel la valeur de seuil est déterminée comme un pourcentage de la capacité maximale de stockage en oxygène du catalyseur (OSC).

3. Procédé (20) selon la revendication 2, dans lequel le pourcentage est supérieur à 80%.

4. Procédé (20) selon l'une quelconque des revendications 1 à 3, dans lequel la capacité maximale de stockage en oxygène (OSC) est déterminée au cours d'une transition d'un mode de fonctionnement en mélange pauvre du moteur, apte à saturer le catalyseur en oxygène, vers un mode de fonctionnement en mélange riche du moteur, apte à vidanger le catalyseur de son stock d'oxygène, le début de ladite saturation étant mise en évidence par le basculement d'une sonde à oxygène située en aval du catalyseur vers un niveau de tension exceptionnellement faible, et le début de ladite vidange étant mise en évidence par le basculement de ladite sonde à oxygène située en aval du catalyseur vers un niveau de tension exceptionnellement élevée.

5. Procédé (20) selon la revendication 4, dans lequel la capacité maximale de stockage en oxygène (OSC) est déterminée à partir d'un débit des gaz d'échappement (Qech) du moteur et d'une richesse (Rλ) provenant d'une sonde située en amont du catalyseur utilisant l'équation suivante :

$$(\beta - \alpha) \times OSC = \int_{t0}^{t1} Q_{ech} \times (1 - R_\lambda) \times \tau_{O2} \times dt \qquad (Eq.3)$$

dans laquelle :

   - $\tau_{O2}$ désigne le taux massique d'oxygène dans l'air (environ 23%),
   - t0 représente l'instant où l'unité électronique de commande bascule le fonctionnement du moteur en mélange riche, immédiatement après le basculement vers une tension exceptionnellement faible de la sonde à oxygène située en aval du catalyseur,
   - t1 représente l'instant où la sonde située en aval du catalyseur bascule vers une tension exceptionnellement élevée,
   - $\alpha$ désigne une constante sensiblement égale à 90%, et
   - $\beta$ désigne une constante sensiblement égale à 40%.

6. Procédé (20) selon l'une quelconque des revendication 1 à 5, dans lequel le délai de transit est cartographié à l'avance dans une mémoire (5a) d'une unité électronique de commande (5) du moteur (2), ledit délai dépendant d'un point de fonctionnement du moteur (2) et de sa géométrie.

7. Système de contrôle de l'injection de carburant dans un moteur (2) à combustion interne, à allumage commandé de véhicule automobile équipé d'un dispositif de post-traitement d'effluents gazeux comprenant au moins un catalyseur (4) de type trois voies, ledit système de contrôle étant **caractérisé en ce qu'**il comprend :

   - Des moyens de détermination de la capacité maximale de stockage en oxygène (OSC) du catalyseur (4),
   - Des moyens de calcul d'une consigne de richesse estimée, calculée en fonction d'un délai de transit des gaz entre le moteur (2) et une ligne d'échappement (3),
   - Des moyens de calcul d'une quantité estimée de stockage en oxygène du catalyseur (4) en fonction de la consigne de richesse estimée, et

- Des moyens de commande de reprise de l'injection lorsque la quantité estimée de stockage en oxygène du catalyseur (4) atteint une valeur de seuil déterminée en fonction de la capacité maximale de stockage en oxygène (OSC) du catalyseur (4).

**8.** Véhicule automobile équipé d'un système de contrôle de l'injection de carburant selon la revendication 7.


**Patentansprüche**

**1.** Verfahren (20) zum Steuern der Kraftstoffeinspritzung in einem Benzinmotor (2) eines Kraftfahrzeugs, der mit einer Abgasnachbehandlungsvorrichtung ausgestattet ist, die mindestens einen Dreiwegekatalysator (4) umfasst, wobei das Steuerungsverfahren **dadurch gekennzeichnet ist, dass** es die folgenden Schritte umfasst:

- Bestimmen der maximalen Sauerstoffspeicherkapazität (OSC) des Katalysators (4),
- Berechnen eines geschätzten Sollwerts für das Kraftstoffgemisch, berechnet auf Basis der Gasdurchlaufzeit zwischen dem Motor (2) und einer Abgasleitung (3),
- Berechnen einer geschätzten Sauerstoffmenge, die im Katalysator (4) gespeichert ist, auf Basis des geschätzten Sollwerts des Kraftstoffgemischverhältnisses, und
- Befehl zur Wiederaufnahme der Einspritzung, wenn die geschätzte Sauerstoffspeicherkapazität des Katalysators (4) einen Schwellenwert erreicht, der auf Basis der maximalen Sauerstoffspeicherkapazität (OSC) des Katalysators (4) bestimmt wird.

**2.** Verfahren (20) nach Anspruch 1, bei dem der Schwellenwert als Prozentsatz der maximalen Sauerstoffspeicherkapazität des Katalysators (OSC) bestimmt wird.

**3.** Verfahren (20) nach Anspruch 2, wobei der Prozentsatz größer als 80 % ist.

**4.** Verfahren (20) nach einem der Ansprüche 1 bis 3, bei dem die maximale Sauerstoffspeicherkapazität (OSC) während eines Übergangs von einem Magergemischbetriebsmodus des Motors, der geeignet ist, den Katalysator mit Sauerstoff zu sättigen, zu einem fetten Betriebsmodus des Motors, der geeignet ist, den Katalysator von seinem Sauerstoffvorrat zu entleeren, bestimmt wird, wobei der Beginn der Sättigung durch das Umschalten einer dem Katalysator nachgeschalteten Sauerstofffühlerleitung auf ein außergewöhnlich niedriges Spannungsniveau und der Beginn des Entleerens durch das Umschalten der dem Katalysator nachgeschalteten Sauerstofffühlerleitung auf ein außergewöhnlich hohes Spannungsniveau klar dargestellt wird.

**5.** Verfahren (20) nach Anspruch 4, bei dem die maximale Sauerstoffspeicherkapazität (OSC) auf einem Abgasvolumenstrom (Qech) des Motors und eines Gemischs (Rλ) von einer dem Katalysator vorgelagerten Fühlerleitung unter Verwendung der folgenden Gleichung bestimmt wird:

$$(\beta - \alpha) \times OSC = \int_{t0}^{t1} Q_{ech} \times (1 - R_\lambda) \times \tau_{O2} \times dt \quad \text{(Gleichung 3)}$$

wobei:

- $\tau_{O2}$ den Massenanteil an Sauerstoff in der Luft (ca. 23 %) bezeichnet,
- t0 den Moment darstellt, zu dem die elektronische Steuereinheit den Betrieb des Motors auf fettes Gemisch umschaltet, unmittelbar nachdem die Spannung der hinter dem Katalysator angeordneten Sauerstofffühlerleitung auf eine außergewöhnlich niedrige Spannung umgeschaltet wurde,
- t1 den Moment darstellt, in dem die dem Katalysator nachgeschaltete Fühlerleitung auf eine außergewöhnlich hohe Spannung umschaltet wurde,
- $\alpha$ eine Konstante von im Wesentlichen 90 % bezeichnet und
- $\beta$ bezeichnet eine Konstante von im Wesentlichen 40 %.

**6.** Verfahren (20) nach einem der Ansprüche 1 bis 5, wobei die Durchlaufzeit im Voraus in einem Speicher (5a) einer elektronischen Steuereinheit (5) des Motors (2) abgebildet wird, wobei diese Laufzeit von einem Betriebspunkt des Motors (2) und seiner Geometrie abhängt.

7. System zum Steuern der Kraftstoffeinspritzung in einem Benzinmotor (2) eines Kraftfahrzeugs, der mit einer Abgasnachbehandlungsvorrichtung ausgestattet ist, die mindestens einen Dreiwegekatalysator (4) umfasst, wobei das Steuerungssystem **dadurch gekennzeichnet ist, dass** es Folgendes umfasst:

- Mittel zum Bestimmen der maximalen Sauerstoffspeicherkapazität (OSC) des Katalysators (4),
- Mittel zum Berechnen eines geschätzten Sollwerts für das Kraftstoffgemisch, berechnet als Funktion der Gasdurchlaufzeit zwischen dem Motor (2) und einer Abgasleitung (3),
- Mittel zum Berechnen einer geschätzten Menge an Sauerstoffspeicherung des Katalysators (4) auf Basis des geschätzten Sollwerts des Kraftstoffgemischs und
- Mittel zur Steuerung der Wiederaufnahme der Einspritzung, wenn die geschätzte Sauerstoffspeichermenge des Katalysators (4) einen Schwellenwert erreicht, der auf Basis der maximalen Sauerstoffspeicherkapazität (OSC) des Katalysators (4) bestimmt wird.

8. Kraftfahrzeug mit einem Kraftstoffeinspritzsteuerungssystem nach Anspruch 7.

**Claims**

1. A method (20) for controlling fuel injection in a spark-ignition internal combustion engine (2) of a motor vehicle, provided with an exhaust after-treatment device comprising at least one three-way catalyst (4), the control method being **characterised in that** it comprises the following steps:

- determining the maximum oxygen storage capacity (OSC) of the catalyst (4),
- calculating an estimated richness setpoint, calculated as a function of a gas transit delay between the engine (2) and an exhaust line (3),
- calculating an estimated quantity of oxygen storage of the catalyst (4) as a function of the estimated richness setpoint, and
- commanding resumption of injection when the estimated quantity of oxygen storage of the catalyst (4) reaches a threshold value determined as a function of the maximum oxygen storage capacity (OSC) of the catalyst (4).

2. The method (20) according to claim 1, wherein the threshold value is determined as a percentage of the maximum oxygen storage capacity (OSC) of the catalyst.

3. The method (20) according to claim 2, wherein the percentage is greater than 80%.

4. The method (20) according to any one of claims 1 to 3, wherein the maximum oxygen storage capacity (OSC) is determined during a transition from an engine lean-mixture operating mode, capable of saturating the catalyst with oxygen, to an engine rich-mixture operating mode, capable of purging the catalyst of its oxygen stock, the beginning of the saturation being evidenced by the switching of an oxygen sensor located downstream of the catalyst to an exceptionally low voltage level, and the beginning of the purging being evidenced by the switching of the oxygen sensor located downstream of the catalyst to an exceptionally high voltage level.

5. The method (20) according to claim 4, wherein the maximum oxygen storage capacity (OSC) is determined from an exhaust gas flow rate (Qech) of the engine and a richness (RA) provided by a sensor located upstream of the catalyst, using the following equation:

$$(\beta - \alpha) \times OSC = \int_{t0}^{t1} Q_{ech} \times (1 - R_\lambda) \times \tau_{O2} \times dt \quad \text{(Eq. 3)}$$

wherein:

- $\tau_{02}$ denotes the mass fraction of oxygen in air (approximately 23%),
- t0 represents the instant at which the electronic control unit switches the engine to rich-mixture operation, immediately after the oxygen sensor located downstream of the catalyst switches to an exceptionally low voltage level,
- t1 represents the instant at which the oxygen sensor located downstream of the catalyst switches to an exceptionally high voltage level,

- α denotes a constant substantially equal to 90%, and
- β denotes a constant substantially equal to 40%.

6. The method (20) according to any one of claims 1 to 5, wherein the gas transit delay is pre-mapped in a memory (5a) of an electronic control unit (5) of the engine (2), the delay depending on an engine operating point and on the geometry of the engine.

7. A system for controlling fuel injection in a spar spark-ignition internal combustion engine (2) of a motor vehicle provided with an exhaust after-treatment device comprising at least one three-way catalyst (4), the control system being **characterised in that** it comprises:

- means for determining the maximum oxygen storage capacity (OSC) of the catalyst (4),
- means for calculating an estimated richness setpoint, calculated as a function of a gas transit delay between the engine (2) and an exhaust line (3),
- means for calculating an estimated quantity of oxygen storage of the catalyst (4) as a function of the estimated richness setpoint, and
- means for commanding resumption of injection when the estimated quantity of oxygen storage of the catalyst (4) reaches a threshold value determined as a function of the maximum oxygen storage capacity (OSC) of the catalyst (4).

8. A motor vehicle provided with a fuel injection control system according to claim 7.

[Fig 1]

[Fig 2]

[Fig 3]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2101953
- FR 2202809
- FR 3101673 A
- US 2018306134 A1